# EUROPEAN PATENT APPLICATION

(11) **EP 4 645 667 A1**
(43) Date of publication of application: **05.11.2025**
(21) Application number: 23910122.3
(22) Date of filing: 13.12.2023
(51) Int. Cl.: H02M 3/335, H02J 7/00

(54) **VEHICLE-MOUNTED THREE-PORT CONVERTER AND CONTROL METHOD**

(30) Priority: 30.12.2022 CN 202211723037
(71) Applicant: United Automotive Electronic Systems Co., Ltd., Pudong New Area Shanghai 201206 (CN)
(72) Inventor: ZHU, Shanshan, Shanghai 201206 (CN); LIN, Lin, Shanghai 201206 (CN); WANG, Xiaokun, Shanghai 201206 (CN); ZHANG, Lingling, Shanghai 201206 (CN)
(74) Representative: Pohlman, Sandra M.
(86) International application number: PCT/CN2023/138309
(87) International publication number: WO 2024/140192

(57) **Abstract**

Disclosed herein is a vehicle-mounted three-port converter including first and second transformers independent of each other. The first transformer includes a first magnetic core, a port-A-side winding and a first port-B-side winding, and the second transformer includes a second magnetic core, a second port-B-side winding and a port-C-side winding. In the circuit at port A, midpoints of first and second bridge arms are coupled to respective opposite terminals of the port-A-side winding. In the circuit at port B, opposite terminals of third, fourth and fifth bridge arms provide port B. Opposite terminals of the first port-B-side winding are coupled respectively to midpoints of the third and fourth bridge arms, and opposite terminals of the second port-B-side winding are coupled respectively to midpoints of the fourth and fifth bridge arms. In the circuit at port C, an input terminal of a rectifier/filter circuit is coupled to the port-C-side winding. Also disclosed herein is a control method for the vehicle-mounted three-port converter. The invention can improve power density of the system and enable the system to provide high charging efficiency.

## Description

### TECHNICAL FIELD

The present invention relates to circuitry, and particularly to a vehicle-mounted three-port converter and a method for control thereof.

### BACKGROUND

As important components in new energy vehicles (NEVs), on-board chargers and on-board direct current to direct current (DC/DC) converters are used to charge on-board high-voltage and low-voltage batteries, respectively, and are typically integrated into on-board charger/converter (CharCon) products currently available on the market.

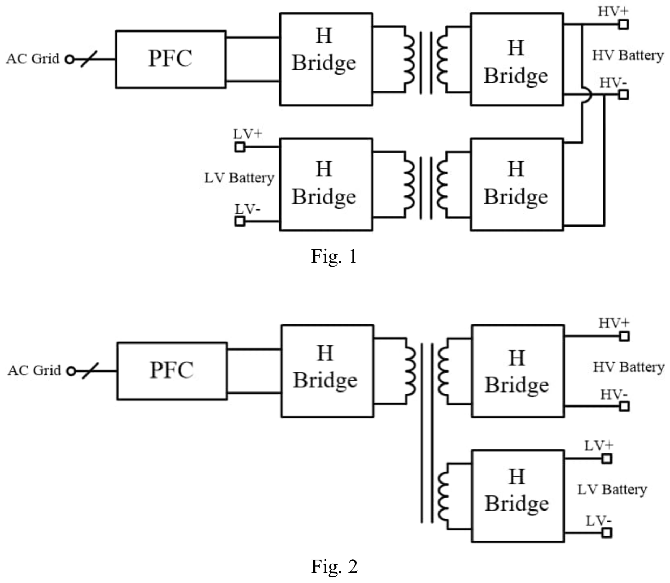

At present, most on-board CharCons are obtained by mechanical integration, i.e., the charger and converter are integrated within a single package, but their circuits operate independently. Fig. 1 shows a circuit block diagram of a mechanically integrated on-board CharCon product, in which a high-voltage (HV) output is connected to a low-voltage (LV) input. Apparently, this integration approach fails to allow the use of a reduced number of electronic elements and still requires independent HV and LV power conversion circuits, which limits further reduction of the product's cost or improvement in its power density.

In order to further lower the cost of such products and improve their power density, many scholars have contemplated circuit integration from a topological perspective. Most such schemes involve integration of HV and LV DC/DC conversion circuits. Fig. 2 shows such an integrated three-port topology, which enables further optimization of product footprint and cost by significantly reducing the number of devices therein through shared use of an HV output circuit and an LV input circuit.

Chinese Pat. App. Pub. No. CN107623365A discloses a three-port charger with inverter capabilities, in which low-voltage MOS transistors are added to the LV side to provide power decoupling. This achieves topological integration as shown in Fig. 2, but requires additional low-voltage MOS transistors, which operate at a frequency twice that of the HV side. Losses that arise from the low-voltage MOS transistors limit further optimization of this topology in terms of frequency.

Chinese Pat. App. Pub. No. CN110649813B discloses an isolated integrated three-port bidirectional DC/DC converter, in which a bridge arm is added to the HV side to provide power decoupling. This also achieves topological integration as shown in Fig. 2, but an integrated transformer therein includes multiple windings, adding difficulty to design, production and quality control.

### SUMMARY

The problem sought to be solved by the present invention is to provide a vehicle-mounted three-port converter operating at a frequency free of limitations arising from losses that may occur in low-voltage MOS transistors, in which the design of magnetic elements in two transformers can be optimized to additionally increase overall power density of the system, and which provides high charging efficiency, as well as a control method for such a converter.

To this end, the present invention provides a vehicle-mounted three-port converter comprising a first transformer T1, a second transformer T2, a circuit at port A, a circuit at port B and a circuit at port C. The first transformer T1 and the second transformer T2 are independent of each other.

The first transformer T1 comprises a first magnetic core, a port-A-side winding n1 and a first port-B-side winding n2.

The second transformer T2 comprises a second magnetic core, a second port-B-side winding n3 and a port-C-side winding.

In the circuit at port A, midpoints of first and second bridge arms are coupled to respective opposite terminals of the port-A-side winding n1 in the first transformer T1, and opposite terminals of the first and second bridge arms provide port A for connection with a bus in a power factor correction (PFC) circuit.

In the circuit at port B, opposite terminals of third, fourth and fifth bridge arms provide port B for outputting a high voltage as a power source.

Opposite terminals of the first port-B-side winding n2 are coupled respectively to midpoints of the third and fourth bridge arms.

Opposite terminals of the second port-B-side winding n3 are coupled respectively to midpoints of the fourth and fifth bridge arms.

In the circuit at port C, an input terminal of a rectifier/filter circuit is coupled to the port-C-side winding of the second transformer T2, and an output terminal of the rectifier/filter circuit provides port C for a low-voltage supply.

Preferably, the port-C-side winding may comprise a first port-C-side winding n4 and a second port-C-side winding n5, and
the circuit at port C may comprise an eleventh switching transistor S11, a twelfth switching transistor S12, a thirteenth switching transistor S13 and a fourteenth switching transistor S14, wherein:
source and drain terminals of each of the twelfth switching transistor S12 and the fourteenth switching transistor S14 are coupled to a dotted terminal of the first port-C-side winding n4 and a negative terminal of the low-voltage rail LV-, respectively;
source and drain terminals of each of the eleventh switching transistor S11 and the thirteenth switching transistor S13 are coupled to a non-dotted terminal of the second port-C-side winding n5 and the negative terminal of the low-voltage rail LV-, respectively; and
a non-dotted terminal of the first port-C-side winding n4 and a dotted terminal of the second port-C-side winding n5 are both coupled to a positive terminal of the low-voltage rail LV+.

Preferably, a first capacitor C1 may be coupled between the thirteenth switching transistor S13 and the negative terminal of the low-voltage rail LV-, wherein:
an anode of a first diode D1 is coupled to the non-dotted terminal of the second port-C-side winding n5, and a cathode thereof is coupled to the negative terminal of the low-voltage rail LV- via the first capacitor C1;
a second capacitor C2 is coupled between the fourteenth switching transistor S14 and the negative terminal of the low-voltage rail LV-; and
an anode of a second diode D2 is coupled to the non-dotted terminal of the first port-C-side winding n4, and a cathode thereof is coupled to the negative terminal of the low-voltage rail LV- via the second capacitor C2.

Preferably, the circuit at port C may further comprise an output inductor Lₒ and an output capacitor Cₒ, wherein:
one terminal of the output inductor Lₒ is coupled to the positive terminal of the low-voltage rail LV+, and another terminal thereof is coupled to the non-dotted terminal of the first port-C-side winding n4 and the dotted terminal of the second port-C-side winding n5; and
opposite terminals of the output capacitor Cₒ are coupled respectively to the positive terminal of the low-voltage rail LV+ and the negative terminal of the low-voltage rail LV-.

Preferably, the circuit at port A may comprises a first switching transistor S1, a second switching transistor S2, a third switching transistor S3 and a fourth switching transistor S4,
the first switching transistor S1 and the second switching transistor S2 making up the first bridge arm, the third switching transistor S3 and the fourth switching transistor S4 making up the second bridge arm.

Preferably, the circuit at port A may further comprise a resonant inductor Lᵣ, a resonant capacitor Cᵣ and an excitation inductor Lₘ,
opposite terminals of the resonant inductor Lᵣ coupled respectively to the midpoint of the first bridge arm and a dotted terminal of the port-A-side winding n1,
opposite terminals of the resonant capacitor Cᵣ coupled respectively to the midpoint of the second bridge arm and a non-dotted terminal of the port-A-side winding n1,
opposite terminals of the excitation inductor Lₘ coupled respectively to the midpoint of the second bridge arm and the opposite terminals of the port-A-side winding n1.

Preferably, the circuit at port B may comprise a fifth switching transistor S5, a sixth switching transistor S6, a seventh switching transistor S7, an eighth switching transistor S8, a ninth switching transistor S9 and a tenth switching transistor S10,
the fifth switching transistor S5 and the sixth switching transistor S6 making up the third bridge arm,
the seventh switching transistor S7 and the eighth switching transistor S8 making up the fourth bridge arm,
the ninth switching transistor S9 and the tenth switching transistor S10 making up the fifth bridge arm.

Preferably, the circuit at port B may further comprise a DC isolation capacitor Cᵢₛₒ,
the DC isolation capacitor Cᵢₛₒ coupled at opposite terminals thereof respectively to the midpoint of the third bridge arm and a dotted terminal of the first port-B-side winding n2.

Preferably, the circuit at port B may further comprise a leakage inductor Lₛ,
the leakage inductor Lₛ coupled at opposite terminals thereof respectively to the midpoint of the fifth bridge arm and a non-dotted terminal of the second port-B-side winding n3.

To the above end, the present invention also provides a control method for the vehicle-mounted three-port converter as defined above, in which power transfer from port A or B to port C comprises:
turning on the eleventh switching transistor S11 and the thirteenth switching transistor S13 in a complementary manner; and
turning on the twelfth switching transistor S12 and the fourteenth switching transistor S14 in a complementary manner,
wherein the eleventh switching transistor S11 and the twelfth switching transistor S12 are turned on with a phase offset of 180°.

Preferably, the power transfer from port A or B to port C may comprise controlling the circuit at port A or B by variable frequency control, variable phase shift control, or both,
the variable frequency control comprising changing frequencies of the switching transistors in the circuit at port A or B; and
the variable phase shift control comprising changing a phase offset of output voltage from the midpoint of each bridge arm in the circuit at port A or B.

Preferably, the power transfer from port A or B to port C may comprise controlling the circuit at port C by changing duty cycles of the eleventh switching transistor S11 and the twelfth switching transistor S12.

Preferably, power transfer from port A to port B may comprise:
turning on the first switching transistor S1 and the fourth switching transistor S4 simultaneously each with a duty cycle of 50% and turning on the second switching transistor S2 and the third switching transistor S3 simultaneously, in the circuit at port A, wherein the first switching transistor S1 and the second switching transistor S2 are turned on in a complementary manner and the third switching transistor S3 and the fourth switching transistor S4 are turned on in a complementary manner, each at the same frequency of fs; and
turning on each of the fifth switching transistor S5, the sixth switching transistor S6, the seventh switching transistor S7, the eighth switching transistor S8, the ninth switching transistor S9 and the tenth switching transistor S10 in the circuit at port B with a duty cycle of 50% at the same frequency of fs, wherein:
   the fifth switching transistor S5 is turned on a first time interval of Dt1 after the first switching transistor S1 is turned on;
   the sixth switching transistor S6 is turned on a first time interval of Dt1 after the second switching transistor S2 is turned on;
   the seventh switching transistor S7 is turned on a first time interval of Dt1 after the second switching transistor S2 is turned on;
   the eighth switching transistor S8 is turned on a first time interval of Dt1 after the first switching transistor S1 is turned on;
   the ninth switching transistor S9 is turned on a second time interval of Dt2 before the eighth switching transistor S8 is turned on;
   the tenth switching transistor S10 is turned on a second time interval of Dt2 before the seventh switching transistor S7 is turned on; and
   both Dt1 and Dt2 are less than 1/2fs.

Preferably, power transfer from port B to port A may comprise:
turning on the fifth switching transistor S5 and the eighth switching transistor S8 simultaneously each with a duty cycle of 50% and turning on the sixth switching transistor S6 and the seventh switching transistor S7 simultaneously, in the circuit at port B, wherein: the sixth switching transistor S6 and the fifth switching transistor S5 are turned on in a complementary manner and the seventh switching transistor S7 and the eighth switching transistor S8 are turned on in a complementary manner, each at the same frequency of fs;
the ninth switching transistor S9 is turned on with a duty cycle of 50% at a frequency of fs a third time interval of Dt3 after the eighth switching transistor S8 is turned on; and
the tenth switching transistor S10 is turned on with a duty cycle of 50% at a frequency of fs a third time interval of Dt3 after the seventh switching transistor S7 is turned on; and
turning on each of the first switching transistor S1, the second switching transistor S2, the third switching transistor S3 and the fourth switching transistor S4 in the circuit at port A each with a duty cycle of 50% at the same frequency of fs, wherein:
   the first switching transistor S1 is turned on a fourth time interval of Dt4 after the fifth switching transistor S5 is turned on;
   the second switching transistor S2 is turned on a fourth time interval of Dt4 after the sixth switching transistor S6 is turned on;
   the third switching transistor S3 is turned on a fourth time interval of Dt4 after the sixth switching transistor S6 is turned on;
   the fourth switching transistor S4 is turned on a fourth time interval of Dt4 after the fifth switching transistor S5 is turned on; and
   both Dt4 and Dt3 are less than 1/2fs.

In the vehicle-mounted three-port converter and method provided herein, the use of the two independent transformers allows for easier design of magnetic elements therein and hence easier production, manufacturing and quality control. Moreover, switching transistors on the low-voltage side are not required to operate at a switching frequency twice that on the high-voltage side, which will lead to greater losses, allowing the high-voltage side to be improved and optimized in terms of frequency. Therefore, the operating frequency of the vehicle-mounted three-port converter is free of limitations arising from losses that may occur in the low-voltage MOS transistors, and the design of the magnetic elements in both transformers can be optimized, additionally increasing overall power density of the system. Additionally, in the vehicle-mounted three-port converter, port B is connected to the high-voltage battery serving as a power source, and port C is coupled to a low-voltage working battery. This topology incorporates combined control, and when operating in a forward mode, the ninth switching transistor S9 and the tenth switching transistor S10 are turned on earlier than the eighth switching transistor S8 and the seventh switching transistor S7. As a result, a current through the eighth switching transistor S8 and the seventh switching transistor S7 is reduced during power transfer from port A simultaneously to ports B and C, leading to reduced losses in these switching transistors and increased overall charging efficiency of the system.

### BRIEF DESCRIPTION OF THE DRAWINGS

In order to illustrate the subject matter of the present invention more clearly, the accompanying drawings that form a part hereof are now briefly described. Apparently, these drawings show only some possible embodiments of the invention, and those of ordinary skill in the art can obtain different figures in light of those described herein without paying any creative effort.
Fig. 1 shows a circuit block diagram of a mechanically integrated on-board charger/converter (CharCon) product.
Fig. 2 shows a circuit block diagram of a conventional integrated on-board three-port charger/converter product.
Fig. 3 is a circuit diagram of a vehicle-mounted three-port converter according to an embodiment of the present invention.
Fig. 4 shows control timing for simultaneous power transfer from port A to ports B and C in a vehicle-mounted three-port converter according to an embodiment of the present invention.
Fig. 5 shows control timing for simultaneous power transfer from port B to ports A and C in a vehicle-mounted three-port converter according to an embodiment of the present invention.

### DETAILED DESCRIPTION

Embodiments of the present invention will be described clearly and fully hereunder in conjunction with the appended drawings. Evidently, the embodiments set forth herein are merely some but not all possible embodiments of the invention. Any and all other embodiments devisable by skilled artisans in light of the disclosed embodiments without paying any creative effort are considered to fall within the scope of protection of this invention.

As used herein, the terms "first," "second," and the like do not denote any order, quantity, or importance, but rather are used to distinguish one element from another. The use of "including" or "comprising" or the like herein is meant to encompass the elements or items listed thereafter and equivalents thereof but do not preclude the presence of other elements or items. The terms "connected", "coupled" or the like are not restricted to physical or mechanical connections or couplings, and can include electrical connections or couplings, whether direct or indirect. "Upper", "lower", "left", "right" or the like may be used to describe only a relative position, which may change with a change in the absolute position of the referenced item.

It is to be noted that should there be no conflict, the embodiments described hereunder and features thereof can be combined in any combination.

The invention will be further described below with reference to the accompanying drawings, which illustrate non-limiting specific embodiments thereof.

### Example 1

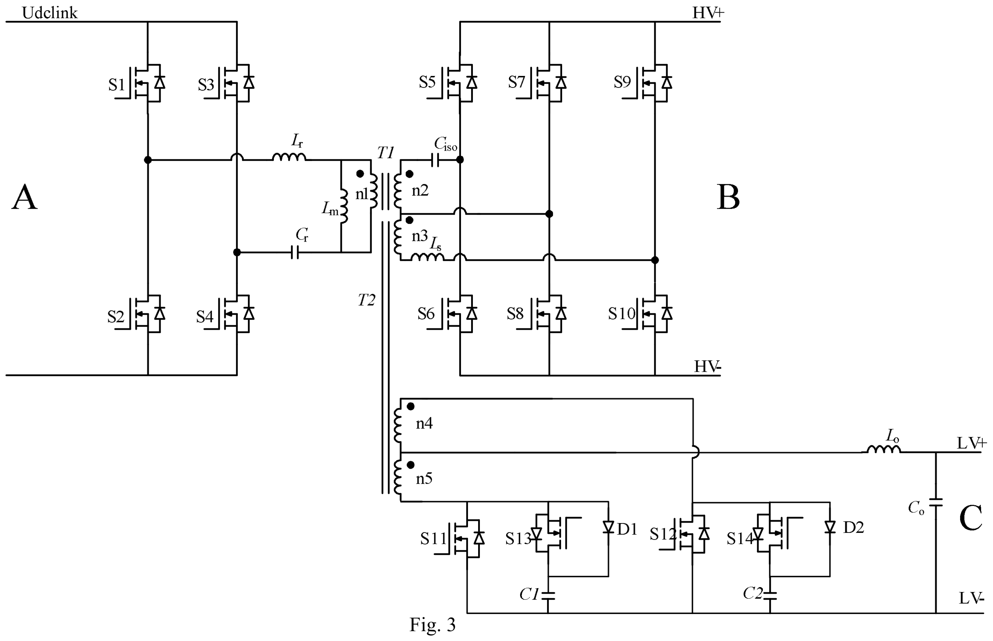

As shown in Fig. 3, a vehicle-mounted three-port converter includes a first transformer T1, a second transformer T2, a circuit at port A, a circuit at port B and a circuit at port C. The first transformer T1 and the second transformer T2 are independent of each other.

The first transformer T1 includes a first magnetic core, a port-A-side winding n1 and a first port-B-side winding n2.

The second transformer T2 includes a second magnetic core, a second port-B-side winding n3 and a port-C-side winding.

In the circuit at port A, midpoints of first and second bridge arms are coupled to respective opposite terminals of the port-A-side winding n1 in the first transformer T1, and opposite terminals of the first and second bridge arms provide port A for connection with a bus in a PFC circuit.

In the circuit at port B, opposite terminals of third, fourth and fifth bridge arms provide (high-voltage, HV) port B for outputting a high voltage (>100 V) for charging a high-voltage battery serving as a power source.

Opposite terminals of the first port-B-side winding n2 are coupled respectively to midpoints of the third and fourth bridge arms.

Opposite terminals of the second port-B-side winding n3 are coupled respectively to midpoints of the fourth and fifth bridge arms.

In the circuit at port C, an input terminal of a rectifier/filter circuit is coupled to the port-C-side winding of the second transformer T2, and an output terminal thereof provides (low-voltage, LV) port C for outputting a low voltage (<50 V) for charging a low-voltage battery serving as a working battery.

In the circuit at port A, a full or half bridge made up of switching transistors, as well as an LC, LLC, CLC, CLLC, CLLLC or similar resonant network, may be present. If required, resonant capacitor(s) and inductor(s) may be arranged in the circuit at port A or B. The circuit at port C may be implemented as a full-bridge, full-wave or current multiplier circuit.

In the vehicle-mounted three-port converter of Example 1, the use of the two independent transformers allows for easier design of magnetic elements therein and hence easier production, manufacturing and control quality. Moreover, switching transistors on the low-voltage side are not required to operate at a switching frequency twice that on the high-voltage side, which will lead to greater losses, allowing the high-voltage side to be improved and optimized in terms of frequency. Therefore, the operating frequency of the vehicle-mounted three-port converter is free of limitations arising from losses that may occur in the low-voltage MOS transistors, and the design of the magnetic elements in both transformers can be optimized, additionally increasing overall power density of the system. Additionally, in the vehicle-mounted three-port converter, port B is connected to the high-voltage battery serving as a power source, and port C is coupled to a low-voltage working battery. This topology incorporates combined control, and when operating in a forward mode, a ninth switching transistor S9 and a tenth switching transistor S10 are turned on earlier than an eighth switching transistor S8 and a seventh switching transistor S7. As a result, a current through the eighth switching transistor S8 and the seventh switching transistor S7 is reduced during power transfer from port A simultaneously to ports B and C, leading to reduced losses in these switching transistors and increased overall charging efficiency of the system.

### EXAMPLE 2

In the vehicle-mounted three-port converter of Example 1, the port-C-side winding includes a first port-C-side winding n4 and a second port-C-side winding n5.

The circuit at port C includes an eleventh switching transistor S11, a twelfth switching transistor S12, a thirteenth switching transistor S13 and a fourteenth switching transistor S14.

Source and drain terminals of each of the twelfth switching transistor S12 and fourteenth switching transistor S14 are coupled to a dotted terminal of the first port-C-side winding n4 and a negative terminal of the low-voltage rail LV-, respectively.

Source and drain terminals of each of the eleventh switching transistor S11 and the thirteenth switching transistor S13 are coupled to a non-dotted terminal of the second port-C-side winding n5 and the negative terminal of the low-voltage rail LV-, respectively.

A non-dotted terminal of the first port-C-side winding n4 and a dotted terminal of the second port-C-side winding n5 are both coupled to a positive terminal of the low-voltage rail LV+.

Preferably, a first capacitor C1 is coupled between the thirteenth switching transistor S13 and the negative terminal of the low-voltage rail LV-.

An anode of a first diode D1 is coupled to the non-dotted terminal of the second port-C-side winding n5, and a cathode thereof is coupled to the negative terminal of the low-voltage rail LV- via the first capacitor C1.

A second capacitor C2 is coupled between the fourteenth switching transistor S14 and the negative terminal of the low-voltage rail LV-.

An anode of a second diode D2 is coupled to the dotted terminal of the first port-C-side winding n4, and a cathode thereof is coupled to the negative terminal of the low-voltage rail LV- via the second capacitor C2.

Preferably, the circuit at port C further includes an output inductor Lₒ and an output capacitor Cₒ.

One terminal of the output inductor Lₒ is coupled to the positive terminal of the low-voltage rail LV+, and another terminal thereof is coupled to the non-dotted terminal of the first port-C-side winding n4 and the dotted terminal of the second port-C-side winding n5.

Opposite terminals of the output capacitor Cₒ are coupled respectively to the positive terminal of the low-voltage rail LV+ and the negative terminal of the low-voltage rail LV-.

In the vehicle-mounted three-port converter of Example 2, the circuit at port C provides full-wave rectification and active clamping, in which the first capacitor C1 and the second capacitor C2 work together with an input terminal thereof to simultaneously supply energy to the low-voltage battery, with increased efficiency of power transfer from port B to port C. This can additionally reduce voltage stress on power devices and increase charging efficiency of the low-voltage battery.

### EXAMPLE 3

In the vehicle-mounted three-port converter of Example 1 or 2, the circuit at port A includes a first switching transistor S1, a second switching transistor S2, a third switching transistor S3 and a fourth switching transistor S4.

The first bridge arm is made up of the first switching transistor S1 and the second switching transistor S2, and the second bridge arm is made up of the third switching transistor S3 and the fourth switching transistor S4.

Preferably, the circuit at port A further includes a resonant inductor Lᵣ, a resonant capacitor Cᵣ and an excitation inductor Lₘ.

Opposite terminals of the resonant inductor Lᵣ are coupled respectively to the midpoint of the first bridge arm and a dotted terminal of the port-A-side winding n1.

Opposite terminals of the resonant capacitor Cᵣ are coupled respectively to the midpoint of the second bridge arm and a non-dotted terminal of the port-A-side winding n1.

Opposite terminals of the excitation inductor Lₘ are coupled respectively to the midpoint of the second bridge arm and the opposite terminals of the port-A-side winding n1.

The resonant inductor Lᵣ, resonant capacitor Cᵣ and the excitation inductor Lₘ make up the resonant network.

### EXAMPLE 4

In the vehicle-mounted three-port converter of Example 1, 2 or 3, the circuit at port B includes a fifth switching transistor S5, a sixth switching transistor S6, the seventh switching transistor S7, the eighth switching transistor S8, the ninth switching transistor S9 and the tenth switching transistor S10.

The third bridge arm is made up of the fifth switching transistor S5 and the sixth switching transistor S6.

The fourth bridge arm is made up of the seventh switching transistor S7 and the eighth switching transistor S8.

The fifth bridge arm is made up of the ninth switching transistor S9 and the tenth switching transistor S10.

Preferably, the circuit at port B further includes a DC isolation capacitor Cᵢₛₒ.

Opposite terminals of the DC isolation capacitor Cᵢₛₒ are coupled respective to the midpoint of the third bridge arm and a dotted terminal of the first port-B-side winding n2.

Preferably, the circuit at port B further includes a leakage inductor Lₛ.

Opposite terminals of the leakage inductor Lₛ are coupled respectively to the midpoint of the fifth bridge arm and a non-dotted terminal of the second port-B-side winding n3.

### EXAMPLE 5

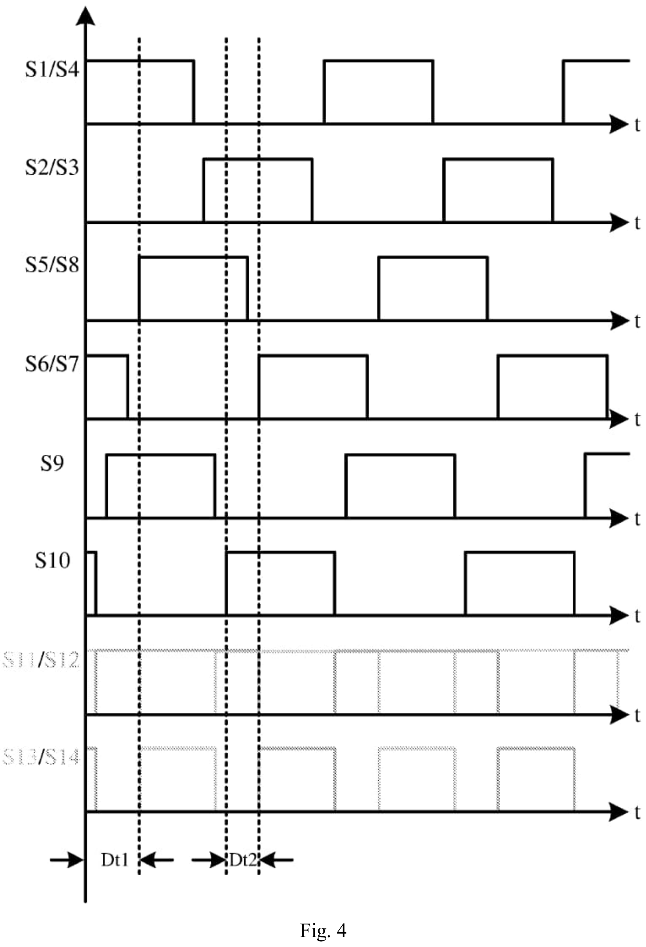

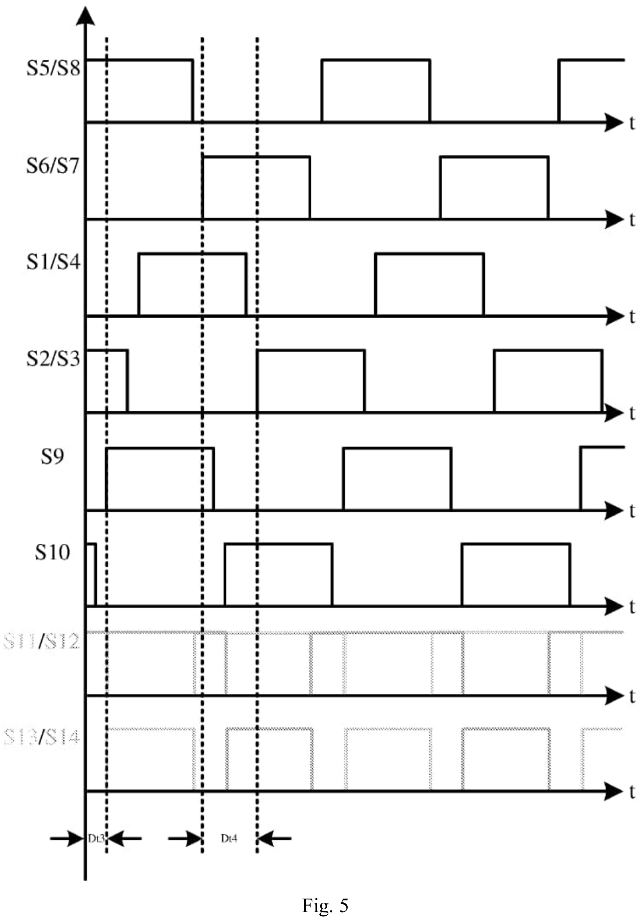

In a control method for the three-port circuit topology of Example 4, as shown in Figs. 4 and 5, during transfer of power from port A or B to port C, the eleventh switching transistor S11 and the thirteenth switching transistor S13 in the circuit at port C are turned on in a complementary manner.

The twelfth switching transistor S12 and the fourteenth switching transistor S14 are turned on in a complementary manner.

The eleventh switching transistor S11 and the twelfth switching transistor S12 are turned on with a phase offset of 180°. The eleventh switching transistor S11 and the twelfth switching transistor S12 serve for synchronous rectification timing.

Preferably, control of the circuit at port A or B for transfer of power from port A or B to port C involves variable frequency control (VFC), variable phase shift control (VPSC), or both.

In the case of VFC, the power transfer control may particularly involve changing frequencies of the switching transistors in the circuit at port A or B.

In the case of VPSC, the power transfer control may particularly involve changing a phase offset of output voltage from the midpoint of each bridge arm in the circuit at port A or B.

Preferably, control of the circuit at port C for transfer of power from port A or B to port C involves changing duty cycles of the eleventh switching transistor S11 and the twelfth switching transistor S12.

### EXAMPLE 6

In control method for the three-port circuit topology of Example 5, as shown in Fig. 4, transfer of power from port A to port B includes:
turning on the first switching transistor S1 and the fourth switching transistor S4 simultaneously each with a duty cycle of 50%, and turning on the second switching transistor S2 and the third switching transistor S3 simultaneously, in the circuit at port A. The first switching transistor S1 and the second switching transistor S2 are turned on in a complementary manner, and the third switching transistor S3 and the fourth switching transistor S4 are turned on in a complementary manner, each at a frequency of fs.

In the circuit at port B, the fifth switching transistor S5, the sixth switching transistor S6, the seventh switching transistor S7, the eighth switching transistor S8, the ninth switching transistor S9 and the tenth switching transistor S10 are each turned on with a duty cycle of 50% at a frequency of fs.

The fifth switching transistor S5 is turned on a first time interval of Dt1 after the first switching transistor S1 is turned on.

The sixth switching transistor S6 is turned on a first time interval of Dt1 after the second switching transistor S2 is turned on.

The seventh switching transistor S7 is turned on a first time interval of Dt1 after the second switching transistor S2 is turned on.

The eighth switching transistor S8 is turned on a first time interval of Dt1 after the first switching transistor S1 is turned on.

The ninth switching transistor S9 is turned on a second time interval of Dt2 before the eighth switching transistor S8 is turned on.

The tenth switching transistor S10 is turned on a second time interval of Dt2 before the seventh switching transistor S7 is turned on.

Both Dt1 and Dt2 are less than 1/2fs.

In the method of Example 6, power transfer control from port A to port B may involve VFC, VPSC or both. Power may be transferred from port A simultaneously to ports B and C, or only to port B concurrently with port C being idle.

### EXAMPLE 7

In a control method for the three-port circuit topology of Example 5, as shown in Fig. 5, transfer of power from port B to port A includes:
turning on the fifth switching transistor S5 and the eighth switching transistor S8 simultaneously each with a duty cycle of 50%, and turning on the sixth switching transistor S6 and the seventh switching transistor S7 simultaneously, in the circuit at port B. The sixth switching transistor S6 and the fifth switching transistor S5 are turned on in a complementary manner, and the seventh switching transistor S7 and the eighth switching transistor S8 are turned on in a complementary manner, each at a frequency of fs.

The ninth switching transistor S9 is turned on with a duty cycle of 50% at a frequency of fs, a third time interval of Dt3 after the eighth switching transistor S8 is turned on.

The tenth switching transistor S10 is turned on with a duty cycle of 50% at a frequency of fs, a third time interval of Dt3 after the seventh switching transistor S7 is turned on.

In the circuit at port A, the first switching transistor S1, the second switching transistor S2, the third switching transistor S3 and the fourth switching transistor S4 are each turned on with a duty cycle of 50% at a frequency of fs.

The first switching transistor S1 is turned on a fourth time interval of Dt4 after the fifth switching transistor S5 is turned on.

The second switching transistor S2 is turned on a fourth time interval of Dt4 after the sixth switching transistor S6 is turned on.

The third switching transistor S3 is turned on a fourth time interval of Dt4 after the sixth switching transistor S6 is turned on.

The fourth switching transistor S4 is turned on a fourth time interval of Dt4 after the fifth switching transistor S5 is turned on.

Both Dt4 and Dt3 are less than 1/2fs.

In the method of Example 7, power transfer control from port B to port A may involve VFC, VPSC or both. Power may be transferred from port B simultaneously to ports A and C, or only to port A concurrently with port C being idle.

Presented above are merely several exemplary embodiments of the present disclosure, and they are not intended to limit this disclosure in any way. Any and all alternations, equivalent substitutions, modifications and so on made within the spirit and principles of the present disclosure are considered to fall within the scope of protection of this disclosure.

## Claims

1. A vehicle-mounted three-port converter, **characterized in** comprising a first transformer (T1), a second transformer (T2), a circuit at port A, a circuit at port B and a circuit at port C, the first transformer (T1) and the second transformer (T2) independent of each other, wherein:
the first transformer (T1) comprises a first magnetic core, a port-A-side winding (n1) and a first port-B-side winding (n2);
the second transformer (T2) comprises a second magnetic core, a second port-B-side winding (n3) and a port-C-side winding;
in the circuit at port A, a midpoint of a first bridge arm and a midpoint of a second bridge arm are coupled to respective opposite terminals of the port-A-side winding (n1) in the first transformer (T1), and opposite terminals of the first bridge arm and the second bridge arm provide port A for connection with a bus in a power factor correction circuit;
in the circuit at port B, opposite terminals of a third bridge arm, a fourth bridge arm and a fifth bridge arm provide port B for outputting a high voltage as a power source;
opposite terminals of the first port-B-side winding (n2) are coupled respectively to a midpoint of the third bridge arm and a midpoint of the fourth bridge arm;
opposite terminals of the second port-B-side winding (n3) are coupled respectively to a midpoint of the fourth bridge arm and a midpoint of the fifth bridge arm; and
in the circuit at port C, an input terminal of a rectifier/filter circuit is coupled to the port-C-side winding of the second transformer (T2), and an output terminal of the rectifier/filter circuit provides port C for a low-voltage supply.

2. The vehicle-mounted three-port converter according to claim 1, wherein:
the port-C-side winding comprises a first port-C-side winding (n4) and a second port-C-side winding (n5) and
the circuit at port C comprises an eleventh switching transistor (S11), a twelfth switching transistor (S12), a thirteenth switching transistor (S13) and a fourteenth switching transistor (S14), wherein:
a source terminal and a drain terminal of each of the twelfth switching transistor (S12) and the fourteenth switching transistor (S14) are coupled to a dotted terminal of the first port-C-side winding (n4) and a negative terminal of the low-voltage rail (LV-), respectively;
a source terminal and a drain terminal of each of the eleventh switching transistor (S11) and the thirteenth switching transistor (S13) are coupled to a non-dotted terminal of the second port-C-side winding (n5) and the negative terminal of the low-voltage rail (LV-), respectively; and
a non-dotted terminal of the first port-C-side winding (n4) and a dotted terminal of the second port-C-side winding (n5) are both coupled to a positive terminal of the low-voltage rail (LV+).

3. The vehicle-mounted three-port converter according to claim 2, wherein:
a first capacitor (C1) is coupled between the thirteenth switching transistor (S13) and the negative terminal of the low-voltage rail (LV-), wherein:
an anode of a first diode (D1) is coupled to the non-dotted terminal of the second port-C-side winding (n5), and a cathode thereof is coupled to the negative terminal of the low-voltage rail (LV-) via the first capacitor (C1);
a second capacitor (C2) is coupled between the fourteenth switching transistor (S14) and the negative terminal of the low-voltage rail (LV-); and
an anode of a second diode (D2) is coupled to the non-dotted terminal of the first port-C-side winding (n4), and a cathode thereof is coupled to the negative terminal of the low-voltage rail (LV-) via the second capacitor (C2).

4. The vehicle-mounted three-port converter according to claim 2, wherein:
the circuit at port C further comprises an output inductor (Lₒ) and an output capacitor (Cₒ), wherein:
one terminal of the output inductor (Lₒ) is coupled to the positive terminal of the low-voltage rail (LV+), and another terminal thereof is coupled to the non-dotted terminal of the first port-C-side winding (n4) and the dotted terminal of the second port-C-side winding (n5); and
opposite terminals of the output capacitor (Cₒ) are respectively coupled to the positive terminal of the low-voltage rail (LV+) and the negative terminal of the low-voltage rail (LV-).

5. The vehicle-mounted three-port converter according to any one of claims 2 to 4, wherein:
the circuit at port A comprises a first switching transistor (S1), a second switching transistor (S2), a third switching transistor (S3) and a fourth switching transistor (S4),
the first switching transistor (S1) and the second switching transistor (S2) make up the first bridge arm, the third switching transistor (S3) and the fourth switching transistor (S4) make up the second bridge arm.

6. The vehicle-mounted three-port converter according to claim 5, wherein:
the circuit at port A further comprises a resonant inductor (Lᵣ), a resonant capacitor (Cᵣ) and an excitation inductor (Lₘ),
opposite terminals of the resonant inductor (Lᵣ) are respectively coupled to the midpoint of the first bridge arm and a dotted terminal of the port-A-side winding (n1),
opposite terminals of the resonant capacitor (Cᵣ) are respectively coupled to the midpoint of the second bridge arm and a non-dotted terminal of the port-A-side winding (n1),
opposite terminals of the excitation inductor (Lₘ) are respectively coupled to the midpoint of the second bridge arm and the opposite terminals of the port-A-side winding (n1).

7. The vehicle-mounted three-port converter according to claim 5, wherein:
the circuit at port B comprises a fifth switching transistor (S5), a sixth switching transistor (S6), a seventh switching transistor (S7), an eighth switching transistor (S8), a ninth switching transistor (S9) and a tenth switching transistor (S10),
the fifth switching transistor (S5) and the sixth switching transistor (S6) make up the third bridge arm,
the seventh switching transistor (S7) and the eighth switching transistor (S8) make up the fourth bridge arm,
the ninth switching transistor (S9) and the tenth switching transistor (S10) make up the fifth bridge arm.

8. The vehicle-mounted three-port converter according to claim 7, wherein:
the circuit at port B further comprises a DC isolation capacitor (Cᵢₛₒ),
opposite terminals of the DC isolation capacitor (Cᵢₛₒ) are respectively coupled to the midpoint of the third bridge arm and a dotted terminal of the first port-B-side winding (n2).

9. The vehicle-mounted three-port converter according to claim 7, wherein:
the circuit at port B further comprises a leakage inductor (Lₛ),
opposite terminals of the leakage inductor (Lₛ) are respectively coupled to the midpoint of the fifth bridge arm and a non-dotted terminal of the second port-B-side winding (n3).

10. A control method for the vehicle-mounted three-port converter of claim 2, wherein: power transfer from port A or B to port C comprises:
turning on the eleventh switching transistor (S11) and the thirteenth switching transistor (S13) in a complementary manner; and
turning on the twelfth switching transistor (S12) and the fourteenth switching transistor (S14) in a complementary manner,
wherein the eleventh switching transistor (S11) and the twelfth switching transistor (S12) are turned on with a phase offset of 180°.

11. The control method for the vehicle-mounted three-port converter according to claim 10, wherein:
the power transfer from port A or B to port C comprises controlling the circuit at port A or B by variable frequency control, variable phase shift control, or both,
the variable frequency control comprises changing frequencies of the switching transistors in the circuit at port A or B; and
the variable phase shift control comprises changing a phase offset of output voltage from the midpoint of each bridge arm in the circuit at port A or B.

12. The control method for the vehicle-mounted three-port converter according to claim 10, wherein:
the power transfer from port A or B to port C comprises controlling the circuit at port C by changing duty cycles of the eleventh switching transistor (S11) and the twelfth switching transistor (S12).

13. The control method for the vehicle-mounted three-port converter according to claim 10, wherein:
the circuit at port A comprises a first switching transistor (S1), a second switching transistor (S2), a third switching transistor (S3) and a fourth switching transistor (S4),
the first switching transistor (S1) and the second switching transistor (S2) make up the first bridge arm, the third switching transistor (S3) and the fourth switching transistor (S4) make up the second bridge arm, and
the circuit at port B comprises a fifth switching transistor (S5), a sixth switching transistor (S6), a seventh switching transistor (S7), an eighth switching transistor (S8), a ninth switching transistor (S9) and a tenth switching transistor (S10),
the fifth switching transistor (S5) and the sixth switching transistor (S6) make up the third bridge arm,
the seventh switching transistor (S7) and the eighth switching transistor (S8) make up the fourth bridge arm,
the ninth switching transistor (S9) and the tenth switching transistor (S10) make up the fifth bridge arm,
wherein power transfer from port A to port B comprises:
in the circuit at port A, turning on the first switching transistor (S1) and the fourth switching transistor (S4) simultaneously each with a duty cycle of 50% and turning on the second switching transistor (S2) and the third switching transistor (S3) simultaneously, wherein the first switching transistor (S1) and the second switching transistor (S2) are turned on in a complementary manner and the third switching transistor (S3) and the fourth switching transistor (S4) are turned on in a complementary manner, each at the same frequency of fs; and
in the circuit at port B, turning on each of the fifth switching transistor (S5), the sixth switching transistor (S6), the seventh switching transistor (S7), the eighth switching transistor (S8), the ninth switching transistor (S9) and the tenth switching transistor (S10) with a duty cycle of 50% at the same frequency of fs, wherein:
the fifth switching transistor (S5) is turned on a first time interval of Dt1 after the first switching transistor (S1) is turned on;
the sixth switching transistor (S6) is turned on a first time interval of Dt1 after the second switching transistor (S2) is turned on;
the seventh switching transistor (S7) is turned on a first time interval of Dt1 after the second switching transistor (S2) is turned on;
the eighth switching transistor (S8) is turned on a first time interval of Dt1 after the first switching transistor (S1) is turned on;
the ninth switching transistor (S9) is turned on a second time interval of Dt2 before the eighth switching transistor (S8) is turned on;
the tenth switching transistor (S10) is turned on a second time interval of Dt2 before the seventh switching transistor (S7) is turned on; and
both Dt1 and Dt2 are less than 1/2fs.

14. The control method for the vehicle-mounted three-port converter according to claim 13, wherein:
power transfer from port B to port A comprises:
in the circuit at port B, turning on the fifth switching transistor (S5) and the eighth switching transistor (S8) simultaneously each with a duty cycle of 50% and turning on the sixth switching transistor (S6) and the seventh switching transistor (S7) simultaneously, wherein: the sixth switching transistor (S6) and the fifth switching transistor (S5) are turned on in a complementary manner and the seventh switching transistor (S7) and the eighth switching transistor (S8) are turned on in a complementary manner, each at the same frequency of fs;
the ninth switching transistor (S9) is turned on with a duty cycle of 50% at a frequency of fs a third time interval of Dt3 after the eighth switching transistor (S8) is turned on; and
the tenth switching transistor (S10) is turned on with a duty cycle of 50% at a frequency of fs a third time interval of Dt3 after the seventh switching transistor (S7) is turned on; and
in the circuit at port A, turning on each of the first switching transistor (S1), the second switching transistor (S2), the third switching transistor (S3) and the fourth switching transistor (S4) each with a duty cycle of 50% at the same frequency of fs,
the first switching transistor (S1) is turned on a fourth time interval of Dt4 after the fifth switching transistor (S5) is turned on;
the second switching transistor (S2) is turned on a fourth time interval of Dt4 after the sixth switching transistor (S6) is turned on;
the third switching transistor (S3) is turned on a fourth time interval of Dt4 after the sixth switching transistor (S6) is turned on;
the fourth switching transistor (S4) is turned on a fourth time interval of Dt4 after the fifth switching transistor (S5) is turned on; and
both Dt4 and Dt3 are less than 1/2fs.
